# EUROPÄISCHE PATENTSCHRIFT

(11) **EP 0 757 153 B1**
(45) Veröffentlichungstag und Bekanntmachung des Hinweises auf die Patenterteilung: **11.04.2001**
(21) Anmeldenummer: 96112513.5
(22) Anmeldetag: 02.08.1996
(51) Int. Cl.: E06B 7/23

(54) **Profiliertes Dichtungsband mit Einlagestreifen und Verfahren zum Verbinden bzw. Herstellung dieser**
Profiled sealing element with insert strips and methods of connecting and fabricating same
Joint d'étanchéité avec des bandes d'insertion et procédés pour sa connexion et sa fabrication

(30) Priorität: 04.08.1995 DE 29512613 U
(43) Veröffentlichungstag der Anmeldung: 05.02.1997
(73) Patentinhaber: Semperit Aktiengesellschaft Holding, 1031 Wien (AT)
(72) Erfinder: Heigl, Dieter, D-94505 Bernried (DE)
(74) Vertreter: Müller, Hans-Jürgen, Dipl.-Ing.

(56) Entgegenhaltungen:
- EP-A- 0 209 453
- EP-A- 0 385 028
- EP-A- 0 698 719
- DE-A- 3 131 551
- DE-C- 4 201 340
- DE-C- 4 338 794

## Beschreibung

Die Erfindung bezieht sich auf ein profiliertes Dichtungsband mit Einlagestreifen für Fenster, Türen, Deckel oder dergleichen Bauteile der im Oberbegriff der Ansprüche 1 und 6 genannten Gattung.

Derartige Dichtungsbänder sind bereits bekannt (DE-AS-31 31 551, 37 19 728, 33 33 474 und US-A-1 918 134). Die Profilierung des Dichtungsbandes hat die Aufgabe, den unterschiedlichen Funktionen desselben gerecht zu werden. So ist ein Teil des Dichtungsbandes mit beispielsweise stegförmigen oder wulstförmigen Dichtungslippen, Dichtungsschenkeln oder dergleichen versehen, um die Dichtungsfunktion zu erfüllen. Diese Dichtungselemente ragen bzw. stehen von einem Basisteil ab, der an seiner den Dichtungselementen entgegengesetzten Seite insbesondere einen Ankerfuß aufweist. Bei einem solchen Dichtungsband ist im gummielastischen bzw. elastomeren wulstförmigen Dichtungselement als Einlagestreifen ein Faden aus Textilcord oder aus Hart-PVC eingebettet, welcher das verhältnismäßig weichelastische Material zu versteifen hat.

Bei einem anderen Dichtungsband (DE-B-42 01 340) ist das als Dichtung wirksame profilierte Band aus weichelastischem Material mit einem zum Verankern des Dichtungbandes dienenden und als Ankerfuß wirksamen Verstärkungsband, das parallel zum als Dichtung wirksamen Band verläuft, gemeinsam extrudiert.

Bei einer weiteren Ausbildung eines bekannten Dichtungsbandes dieser Gattung, das als Abdichtung von Kühlschranktüren verwendet wird, besteht der Einlagestreifen aus einer Drahtwendel, die in das als Dichtung wirksame Band aus Schaumstoff eingebettet ist, indem die Wendelfeder durch einen zentralen Kanal des Dichtungsbandes hindurchläuft. An einem Stirnende befindet sich ein ösenförmig gebogener Endteil der Wendelfeder, während am anderen Stirnende des Dichtungsbandes ein hakenförmig gebogener Endteil der Wendelfeder angeordnet sind, so daß die beiden Stirnenden des Dichtungsbandes durch Verhaken der Endteile der Wendelfeder miteinander verbunden werden können.

Daneben sind Dichtungsprofile bekannt (DE-U-93 08 418 oder US-A-4 614 347), die als Armierung metallische Verstärkungselemente aufweisen, um einerseits die Dichtfunktion durch weichelastische Materialien herzustellen und um andererseits das Dichtungsprofil mechanisch belastbar zu gestalten.

Darüber hinaus ist es bekannt (Detail 5/1970, S. 1096), Dichtungsprofile für Fenster und Türen aus thermoplastischem PVC verschiedener Härteeinstellungen und zwar einerseits eines verhältnismäßg weichen Dichtungsteils und andererseits eines vergleichsweise härteren Befestigungsfußes herzustellen. Dabei offenbart beispielsweise DE-A-38 35 211 einen Dichtstreifen aus Gummi, der aus einem Dichtschlauch und einem mit dem Dichtschlauch verbundenen Montagestreifen besteht, wobei der Montagestreifen mit einer geschlitzten und mit Gummi ummantelten Armierung in Form eines Klemmstreifens versehen ist. Hierzu ist vorgesehen, daß der Klemmstreifen ein Hartgummistreifen ist, der mit einer Ummantelung aus Weichgummi durch Vulkanisation innig verbunden ist.

Schließlich sind extrudierte Hohlkammerprofile aus modifiziertem PVC bekannt, welche insbesondere zur Herstellung von Fensterprofilen dienen und verhältnismäßig steif und schlagzäh sind. Um aus solchen geradförmigen Hohlkammerprofilen beispielsweise rechteckförmige Fensterrahmen herzustellen, werden die Rahmenprofile an den Enden auf Gehrung angeschrägt und nach spaltfreiem Aneinanderlegen des Gehrungsschnitte an den Ecken verklebt oder stumpf geschweißt. Der gesamte Profilquerschnitt muß an der aufgeschmolzenen Fügefläche eine homogene Bindung durch ausreichende Schmelzdiffusion nach dem Abkühlen gewährleisten. Dabei ist ein Nachbearbeiten der Schweißnähte durch beispielsweise Entfernen der Schweißwülste und Nachschleifen der betreffenden Verbindungsstellen erforderlich.

Die Anwendung dieser thermoplastischen Verschweißtechnik auf profilierte Dichtungsbänder der eingangs genannten Gattung hat sich als höchst nachteilig erwiesen, da die Dichtungseigenschaften an den miteinander verbundenen Stirnenden des Dichtungsbandes häufig zu wünschen übrig lassen und auch die Nachbearbeitung unerwünscht ist.

Der Erfindung liegt die Aufgabe zugrunde, das Verbinden von Stirnenden des Dichtungsbandes der eingangs genannten Gattung auf einfache Weise ohne Beeinträchtigung der Dichtungsfunktion und Festigkeit zu verbessern.

Die Erfindung ist im Anspruch 1 gekennzeichnet und in Unteransprüchen sind bevorzugte Ausbildungen beansprucht. Auch anhand der Figurenbeschreibung werden im folgenden bevorzugte Spezialausbildungen schematisch beschrieben:

Gemäß der Erfindung ist der Einlagestreifen aus schweißbarem Material, insbesondere verschweißbarem PVC, im Übergangsbereich zwischen einem Basisteil und einem Ankerfuß angeordnet, der zum Befestigen des Dichtungsbandes dient. Das Material der Einlagestreifen besteht somit vorzugsweise aus einem mit sich selbst verschweißbaren polymeren Werkstoff (z.B. Thermoplaste oder thermoplastische Elastomere wie in DIN 7724 charakterisiert oder gleichwertig). Dabei empfiehlt es sich, nicht nur einen, sondern zwei im gleichmäßigen Abstand voneinander in das Dichtungsband eingebettete Einlagestreifen zu verwenden. Das Verschweißen erfolgt bevorzugt thermisch dadurch, daß die Einlagestreifen insbesondere durch Heißgas, Strahlungswärme, hochfrequente Wechselströme oder Ultraschall im Bereich der Stirnenden erwärmt werden. Es ist aber auch das sogenannte Quellschweißen durch Anquellen mit einem Lösungsmittel anwendbar. Auch Lösungsschweißen ist anwendbar.

Als Querschnitt für die Einlagestreifen wird ein kreisförmiger oder elliptischer bevorzugt, doch sind auch rechteckige, dreieckige oder fünfeckige sowie rombusförmige Streifenquerschnitte verwendbar. Das Einbetten von Einlagestreifen muß nicht vollständig erfolgen; es ist durchaus möglich, daß ein Teil des Einlagestreifens nach außen freiliegt.

Dieser freiliegende Teil sollte sich allerdings an einer solchen Außenfläche des Dichtungsbandes befinden, bei dem entweder eine Nachbearbeitung auf einfache Weise möglich oder gar nicht erforderlich ist.

Nach einer besonderen Ausführung der Erfindung befindet sich der thermoplastische Einlagestreifen nicht in dem profilierten, der eigentlichen Dichtung dienenden Band, sondern in einem zusätzlichen vergleichsweise härteren Verstärkungsband, mit dem das als Dichtung wirksame Band an einer Längsseite verbunden ist, so daß sich längs des Dichtungsbandes sowohl das die Dichtungselemente, beispielsweise Dichtungsschenkel und Dichtungswülste, aufweisende Band als auch das Verstärkungsband erstrecken, das insbesondere einen Basisteil und einen zum Befestigen des Dichtungsbands in beispielsweise einem Aluminiumprofil dienenden Ankerfuß aufweist. Bei dieser Ausbildung empfiehlt es sich, zwei oder drei Einlagestreifen im Übergangsbereich zwischen dem Verstärkungsband und dem Ankerfuß anzuordnen.

Die Herstellung erfolgt bevorzugt in einfacher Weise dadurch, daß sowohl die Einlagestreifen als auch das als Dichtung wirksame Band und auch das evtl. verwendete Verstärkungsband in einem einzigen Strangpreßvorgang, dem sogenannten Coextrusionsverfahren, hergestellt werden.

Anhand der Zeichnungen sind Ausführungsbeispiele der Erfindung schematisch dargestellt. Die Art der Darstellung ermöglicht dem Fachmann das Erkennen bevorzugter Maßnahmen, ohne daß hierauf in der folgenden Figurenbeschreibung jeweils detailliert Stellung zu nehmen ist. Dabei zeigen:
- Fig. 1: den Querschnitt eines erfindungsgemäßen Dichtungsbandes, dessen Ankerfuß in dem in unterbrochenen Linien angedeuteten Rahmenprofil eingesetzt ist,
- Fig. 2: eine andere Ausbildung der Erfindung in Querschnitt und
- Fig. 3: einen Querschnitt durch die Enden zweier miteinander verbundener Dichtungsbänder gemäß der Erfindung in Bandlängsrichtung.

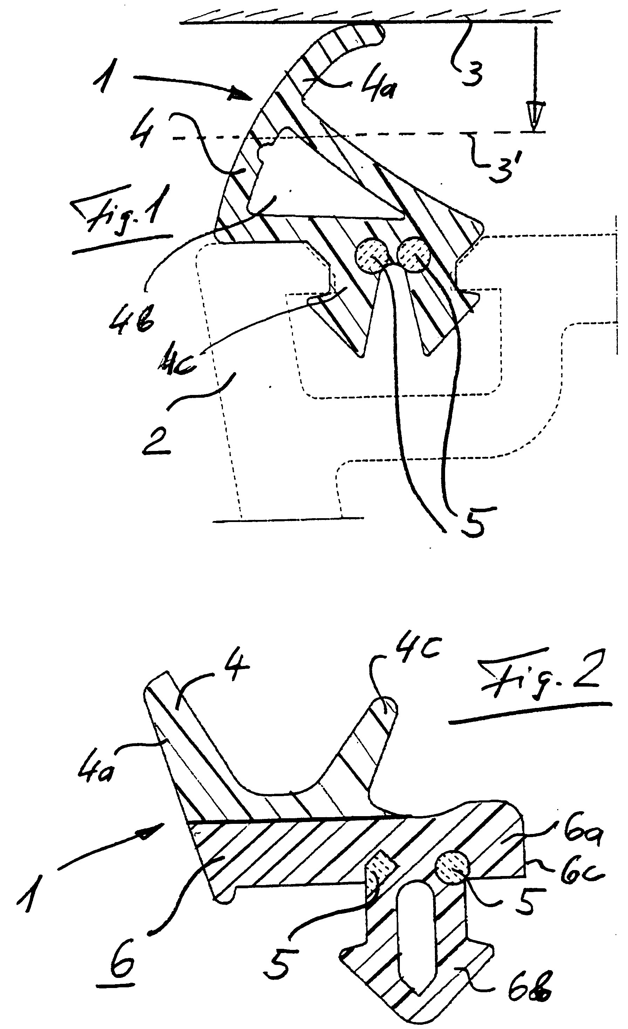

Gemäß Fig. 1 besteht das Dichtungsband 1 im wesentlichen aus dem als Dichtung wirksamen profilierten Band 4 aus elastomerem Material, insbesondere EPDM. In das in unterbrochenen Linien angedeutete Rahmenprofil 2 ist der Ankerfuß 4c des Dichtungsbandes 1 eingesetzt, so daß dessen zur Dichtung dienende Teil "über das Rahmenprofil 2 in Richtung zu einer Gegenfläche 3, beispielsweise einer Fensterscheibe, absteht. Wird die Gegegenfläche 3 in Pfeilrichtung bewegt, so wird der als Dichtung wirksame Dichtungsschenkel 4a in Richtung zum Rahmenprofil 2 gedrückt; dabei staucht sich auch der dazwischen befindliche, mit einem im wesentlichen dreieckförmigen Hohlraum 4b ausgestattete Bandteil 1, so daß in der in unterbrochenen Linien gezeigten Position der Gegenfläche 3' eine gute Abdichtung erreicht ist. Im Übergangsbereich zwischen dem Ankerfuß 4c und dem anderen Teil des Bandes 4 sind im Abstand voneinander zwei im Querschnitt kreisförmige Einlagestreifen 5 aus PVC eingebettet.

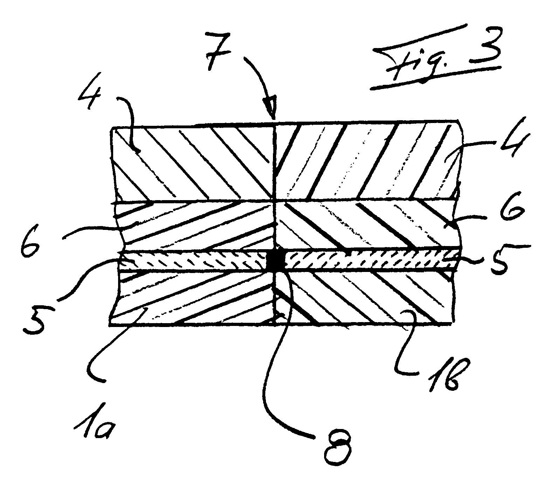

Gemäß Fig. 2 ist das Dichtungsband 1 hinsichtlich seiner die Dichtungsfunktion erfüllenden Teile des Bandes 4, nämlich der beiden Dichtungsschenkel 4a und 4c, aus einem weichelastischem Material einer Shore-A-Härte zwischen 30 und 80 hergestellt, während sich der darunter befindliche Teil des Dichtungsbandes 1 aus einem demgegenüber hartelastischen Material, beispielsweise EPDM einer Shore-A-Härte zwischen 70 und 95 besteht. Dieses als Verstärkungsband 6 dienende Teil bildet den Basisteil 6a und den Ankerfuß 6b. Auch hier sind im Übergangsbereich dieser beiden Teile zwei Einlagestreifen 5 aus PVC eingebettet, von denen der einem Seitenrand 6c zugewandte Einlagestreifen 5 einen kreisförmigen Querschnitt aufweist, während der andere Einlagestreifen 5, welcher dem als Dichtung wirksamen Band 4 zugewandt ist, einen kantigen Querschnitt, hier einen Fünfkant(bzw. Vierkant)-Querschnitt aufweist und mit einem kleinen Teil an einer nicht störenden Stelle nach außen frei liegt.

Gemäß Fig. 3 sind die beiden Stirnenden ein und desselben Dichtungsbandes oder die Stirnenden zweier mit den Stirnseiten aneinander gelegten Dichtungsbänder la, lb dadurch miteinander verbunden, daß an der Stoßstelle 7, an der sich die beiden Stirnenden der benachbarten Dichtungsbänder la, lb befinden, die Stirnenden der Einlagestreifen 5 aus PVC - oder einem thermoplastisch und rheologisch ähnlich verhaltenden Materialan der Schweißstelle 8 miteinander verschweißt sind. Das Verschweißen erfolgt beispielsweise durch solche bekannte Schweißeinrichtungen, welche in Kunststoffe 73 (1983), Seiten 118 bis 122, beschrieben sind. Dabei werden die thermoplastischen Einlagestreifen aus insbesondere Kunststoff an den Stirnenden so weit aufgeschmolzen, daß diese eine ausreichende Schmelzediffusion eingehen. Sie werden insbesondere im aneinandergedrückten Zustand so weit abgekühlt, daß eine feste Verbindung entsteht. Eine Nachbearbeitung ist nicht erforderlich, da Schmelz- bzw. Schweißwülste nach außen nicht in Erscheinung treten und die übrigen Eigenschaften des Dichtungsbandes in keiner Weise beeinträchtigen.

Nach einer besonderen Ausbildung der Erfindung empfiehlt es sich, in den Einlagestreifen oder im Bereich um diesen solches Material anzuordnen, das sich bei Wirksamwerden hochfrequenter elektromagnetischer Wechselfelder erwärmt und hierdurch die sogenannte "Hochfrequenzschweißung" stattfindet. Hierdurch kann das Erhitzen auf den Bereich der Einlagestreifen besser konzentriert werden. Es empfehlen sich Graphiteinlagen.

## Patentansprüche

1. Profiliertes Dichtungsband für Fenster, Türen, Deckel oder dergleichen Bauteile mit einem strangförmigen, als Dichtung wirksamen profilierten Band (4) aus gummielastischem bzw. elastomerem Material und mit mindestens einem gleichfalls strangförmigen in das Dichtungsband mindestens teilweise eingebetteten Einlagestreifen (5) aus schweißbarem, insbesondere thermoplastischem Material,
**dadurch gekennzeichnet,**
daß der/die Einlagestreifen (5) im Übergangsbereich zwischen einem Basisteil (6a) und einem Ankerfuß (6b) des Dichtungsbandes mindestens teilweise eingebettet ist/sind.

2. Dichtungsband nach Anspruch 1,
**dadurch gekennzeichnet,**
daß mindestens zwei Einlagestreifen (5) in das Dichtungsband (1) eingebettet sind.

3. Dichtungsband nach Anspruch 1 oder 2,
**dadurch gekennzeichnet,**
daß das als Dichtung wirksame Band (4) mit einem im wesentlichen parallelen hartelastischem Verstärkungsband (6) verbunden ist.

4. Dichtungsband nach Anspruch 3,
**dadurch gekennzeichnet,**
daß das als Dichtung wirksame Band (4) aus EPDM einer Shore-A-Härte zwischen 30 und 80 besteht und daß das hartelastische Verstärkungsband (6) aus EPDM einer Shore-A-Härte zwischen 70 und 95 besteht.

5. Dichtungsband nach Ansprüche 3 oder 4,
**dadurch gekennzeichnet,**
daß der/die Einlagestreifen (5) im hartelastischen Verstärkungsband (6) eingebettet ist/sind.

6. Dichtungsband nach einem der vorhergehenden Ansprüche,
**dadurch gekennzeichnet,**
daß in und/oder um den/die Einlagestreifen (5) Material angeordnet ist, das sich bei Anwendung hochfrequenter elektromagnetischer Wechselfelder zum Verschweißen erwärmt.

7. Dichtungsband nach Anspruch 6,
**dadurch gekennzeichnet,**
daß der/die Einlagestreifen (5) nicht vollständig im Band (4) und/oder in Verstärkungsbändern (6) eingebettet sind.

8. Dichtungsband nach Anspruch 6 oder 7,
**dadurch gekennzeichnet,**
daß Graphit als durch hochfrequente Wechselfelder erwärmbares Material verwendet ist.

## Claims

1. Profiled sealing band and strip, respectively, for windows, doors, covers or there like building parts comprising a strip like profiled band (4) of rubber-elastic or elastomere material for sealing purposes and an inserted strip (5) of weldable in particular thermoplastic material at least partially embedded into the sealing band and strip, respectively
**characterized therein**,
that the inserted strip(s) (5) is/are at least partially embedded into the tansition area between a base part (6a) and an anchoring part (6b) of the sealing band and strip, respectively.

2. Sealing band according to claim 1,
**characterized therein,**
that at least two inserted strips (5) are embedded into the sealing band (1).

3. Sealing band according to claim 1 or 2,
**characterized therein**,
that the band (4) being effective as a seal is connected with a substantially parallel reinforcing band (6) being hard-elastic.

4. Sealing band according to claim 3,
**characterized therein**,
that the sealing band (4) consists of EPDM of a shore-A-hardness between 30 and 80 and that the hard-elastic reinforcing band (6) consists of EPDM of a shore-A-hardness between 70 and 95.

5. Sealing band according to claim 3 or 4,
**characterized therein**,
that the inserted strip s) (5) is/are embedded into the hard-elastic reinforcing band (6).

6. Sealing band according to one of the preceeding claims,
**characterized in that,**
that material warming up in the presence of high frequency electromagnetic alternating fields for welding is disposed within and/or around the inserted strip(s) (5).

7. Sealing band according to claim 6,
**characterized in that,**
that the inserting strip(s) (5) is incompletely embedded into the band (4) and/or into the reinforcing bands (6).

8. Sealing band according to claim 6 or 7,
**characterized in that,**
that graphite is used as the material warming up by high frequency alternating fields.

## Revendications

1. Ruban de joint profilé pour fenêtres, portières, couvercles ou des composants similaires, comprenant un ruban profilé (4), sous forme de corde, effectif en tant que garniture et fait en un matériau élastique ou respectivement élastomère, et comprenant au moins une bande d'armature (5) en un matériau soudable, particulièrement thermoplastique, qui est également prévue sous forme de corde et encastrée au moins en partie dans le ruban de joint,
**caractérisé en ce**
que ladite/lesdites bande(s) d'armature (5) est/sont encastrée(s), au moins en partie, dans la zone de transition entre une partie de base (6a) et une partie inférieure d'ancrage (6b) du ruban de joint.

2. Ruban de joint selon la revendication 1,
**caractérisé en ce**
qu'au moins deux bandes d'armature (5) sont encastrées dans le ruban de joint (1).

3. Ruban de joint selon la revendication 1 ou 2,
**caractérisé en ce**
que ledit ruban (4) effectif en tant que garniture est relié à un ruban de renforcement (6) élastique rigide essentiellement en parallèle.

4. Ruban de joint selon la revendication 3,
**caractérisé en ce**
que ledit ruban (4) effectif en tant que garniture est fait en un matériau EPDM à une dureté Shore-A entre 30 et 80, et en ce que ledit ruban de renforcement (6) élastique rigide est fait en un matériau EPDM à une dureté Shore-A entre 70 et 95.

5. Ruban de joint selon les revendications 3 ou 4,
**caractérisé en ce**
que ladite/lesdites bande(s) d'armature (5) est/sont encastrée(s) dans ledit ruban de renforcement (6) élastique rigide.

6. Ruban de joint selon une quelconque des revendications précédantes,
**caractérisé en ce**
que du matériau est disposé dans et/ou autour ladite/lesdites bande(s) d'armature (5), qui est chauffé quand des champs électromagnétiques alternants haute-fréquence sont appliqués pour la soudure.

7. Ruban de joint selon la revendication 6,
**caractérisé en ce**
que ladite/lesdites bande(s) d'armature (5) n'est/ne sont pas encastrée(s) complètement dans ledit ruban (4) et/ou dans des rubans de renforcement (6).

8. Ruban de joint selon la revendication 6 ou 7,
**caractérisé en ce**
que du graphite est utilisé en tant que matériau chauffable moyennant des champs alternants haute-fréquence.
